# EUROPÄISCHE PATENTSCHRIFT

(11) **EP 1 468 229 B1**
(45) Veröffentlichungstag und Bekanntmachung des Hinweises auf die Patenterteilung: **11.08.2010**
(21) Anmeldenummer: 03704444.3
(22) Anmeldetag: 21.01.2003
(51) Int. Cl.: F25D 27/00, F25D 23/02, F25D 29/00, G02B 6/00

(54) **KÜHLMÖBEL, INSBESONDERE KÜHLSCHRANK**
REFRIGERATING APPLIANCE, ESPECIALLY A REFRIGERATOR
MEUBLE DE REFRIGERATION, NOTAMMENT REFRIGERATEUR

(30) Priorität: 22.01.2002 DE 10202444
(43) Veröffentlichungstag der Anmeldung: 20.10.2004
(73) Patentinhaber: Miele & Cie. KG, 33332 Gütersloh (DE)
(72) Erfinder: AVENWEDDE, Josef, 33415 Verl (DE); KLAUSFERING, Werner, 33415 Verl (DE); POLLMÜLLER, Burkhard, 33335 Gütersloh (DE); SCHNEIDER, Daniel, 33415 Verl (DE); WIENSTRÖER, Rainard, 33803 Steinhagen (DE)
(86) Internationale Anmeldenummer: PCT/EP2003/000550
(87) Internationale Veröffentlichungsnummer: WO 2003/062722

(56) Entgegenhaltungen:
- EP-A- 0 971 186
- WO-A-00/14448
- DE-A- 19 830 845
- US-A- 3 506 325
- US-A- 4 489 995
- US-A- 5 287 252
- US-A- 5 937 666
- US-A- 5 980 058
- US-B1- 6 210 013
- US-B1- 6 275 339

## Beschreibung

Die Erfindung betrifft ein Kühlmöbel, insbesondere Kühlschrank, der im Oberbegriff des Anspruchs 1 genannten Art.

Ein derartiges Kühlmöbel ist beispielsweise aus der US 3,506,325 bekannt. Das bekannte Kühlmöbel weist eine verschiebbar gelagerte Platte auf, die mit einer Lichtquelle ausgebildet ist. Die Lichtquelle weist ein erstes elektrisches Übertragungsmittel auf, das mit einem zweiten elektrischen Übertragungsmittel im Gehäuse des Kühlmöbels zusammenwirkt, so dass elektrischer Strom zur Lichtquelle an der Platte übertragbar ist. Die Lichtquelle ist als großflächige Leuchtschicht ausgebildet und an der Platte angeordnet.

Aus der DE 697 02 771 T2 ist ein innen beleuchteter Kühlschrank bekannt, bei dem die Beleuchtung durch eine als randbeleuchtete Ablage aus im Wesentlichen transparentem Material ausgebildete Platte gebildet wird. An der Ablage ist, beispielsweise durch Bedrucken, eine Matrix aus Punkten angebracht. Dabei dienen die auf die Oberfläche der Ablage gedruckten Punkte als Lichtaustrittsflächen. Die in einem entlang eines Randes der Ablage angeordneten Gehäuse befindliche Lichtquelle ist über ein Kabel mit einer Stromquelle und einem Steuermechanismus elektrisch verbunden. Ein Nachteil des bekannten Kühlmöbels ist, dass die räumliche Anordnung der randbeleuchteten Ablage durch den Benutzer auf dessen individuelle und sich zeitlich verändernden Wünsche und Anforderungen nicht angepasst werden kann.

Der Erfindung stellt sich somit das Problem ein Kühlmöbel, insbesondere Kühlschrank, zu schaffen, bei dem die räumliche Anordnung der randbeleuchteten Platte veränderbar ist.

Erfindungsgemäß wird dieses Problem durch ein Kühlmöbel, insbesondere Kühlschrank, mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Möglichkeit die räumliche Anordnung der als Lichtleiter verwendeten Platte zu verändern insbesondere darin, dass die Platte vollständig von dem Kühlmöbel entfernbar ist. Beispielsweise ist es ermöglicht, im Inneren des Kühlmöbels auf mehreren vertikal voneinander beabstandeten Ebenen den Korpus mit zweiten elektrischen bzw. elektromagnetischen Übertragungsmitteln auszubilden, so dass ein oder mehrere als Lichtleiter verwendete Platten in dem Inneren des Kühlmöbels auf verschiedenen Ebenen angeordnet werden können. Auch ist es ermöglicht, dass gleichzeitig mit den als Lichtleiter verwendeten und als Ablagen ausgebildeten Platten auch Ablagen ohne Lichtleiterfunktion benutzbar sind, wobei Ablagen mit und ohne Lichtleiterfunktion, auch in Kombination miteinander, auf allen Ebenen gleichermaßen verwendbar sind. Ferner ist eine nachträgliche Umrüstung, beispielsweise auf Ablagen mit einer anderen Lichtquelle oder mit anders ausgebildeten Lichtaustrittsflächen auf einfache Weise vor Ort möglich, so dass auch technisch nicht versierte Benutzer die Umrüstung vornehmen können. Ähnliches gilt für defekte Ablagen, die ausgetauscht werden müssen. Bei einer als Zwischenwand ausgebildeten und an der Innenseite einer Tür angeordneten Platte, ist die Möglichkeit, die Platte entfernen zu können, ebenfalls von Vorteil. Beispielsweise ist eine beschädigte bzw. defekte Platte auf einfache Weise durch eine neue Platte austauschbar. Ferner ist die Reinigung der Platte vereinfacht bzw. deren allseitige Reinigung ermöglicht.

Grundsätzlich sind das erste und das zweite elektrische bzw. elektromagnetische Übertragungsmittel in weiten geeigneten Grenzen wählbar. Vorteilhafterweise sind das erste elektrische bzw. elektromagnetische Übertragungsmittel als eine elektrische Sekundärspule und das zweite elektrische bzw. elektromagnetische Übertragungsmittel als eine elektrische Primärspule ausgebildet. Hierdurch ist eine induktive Leistungsübertragung, also die elektromagnetische Übertragung eines elektrischen Stromes von dem zweiten elektromagnetischen Übertragungsmittel auf das erste elektromagnetische Übertragungsmittel, ermöglicht, so dass beispielsweise die Möglichkeit einer Funkenbildung zwischen ersten und zweiten elektrischen Kontakten in dem durch die Tür verschlossenen Inneren des Kühlmöbels ausgeschlossen ist.

Eine andere vorteilhafte Weiterbildung der erfindungsgemäßen Lehre sieht vor, dass das erste elektrische bzw. elektromagnetische Übertragungsmittel als erste elektrische Kontakte und das zweite elektrische bzw. elektromagnetische Übertragungsmittel als zweite elektrische Kontakte ausgebildet und in dem eingeführten bzw. eingebauten Zustand elektrisch leitend verbunden sind. Hierdurch sind das erste und das zweite elektrische bzw. elektromagnetische Übertragungsmittel auf besonders einfache Weise verwirklicht.

Grundsätzlich ist die Platte nach Art und Material in weiten geeigneten Grenzen wählbar. Vorteilhafterweise ist die Platte als aus dem Inneren des Kühlmöbels herausnehmbare Ablage ausgebildet. Ferner sieht eine andere vorteilhafte Weiterbildung vor, dass die Platte als von der Innenseite einer Tür entfernbare Zwischenwand ausgebildet ist.

Eine vorteilhafte Weiterbildung der erfindungsgemäßen Lehre sieht vor, dass die elektrische Lichtquelle in einem mit dem Rand der Platte unlösbar oder lösbar verbundenen Gehäuse angeordnet ist. Auf diese Weise ist die elektrische Lichtquelle vor Beschädigungen, beispielsweise bei dem Einführen in bzw. bei dem Herausnehmen aus dem Inneren des Kühlmöbels, geschützt. Ferner ist in dem eingeschalteten Zustand der elektrischen Lichtquelle die ungewünschte Ausbreitung von Streulicht verhindert.

Eine zweckmäßige Weiterbildung der erfindungsgemäßen Lehre sieht vor, dass die Lichtaustrittsfläche durch mindestens eine Vertiefung in der Oberfläche der Seite gebildet ist. Auf diese Weise ist die Lichtaustrittsfläche besonders langlebig ausgeführt.

Eine besonders vorteilhafte Weiterbildung sieht vor, dass die zweiten elektrischen Kontakte als Aufnahmen ausgebildet und die ersten elektrischen Kontakte als Stifte und in die Aufnahmen eingreifbar ausgebildet sind. Hierdurch ist eine konstruktiv einfache und funktionssichere elektrische Kontaktierung zwischen dem ersten elektrischen Kontakt und dem zweiten elektrischen Kontakt gegeben.

Eine andere Weiterbildung der erfindungsgemäßen Lehre sieht vor, dass die zweiten elektrischen Kontakte als im wesentlichen in einer Ebene mit einer Oberfläche des Kühlmöbels liegende flächige zweite Kontaktstellen und die ersten elektrischen Kontakte als im wesentlichen in einer Ebene mit einer Oberfläche des Randbereichs der Platte liegende flächige erste Kontaktstellen und an die korrespondierenden zweiten Kontaktstellen elektrisch leitend anlegbar ausgebildet sind. Auf diese Weise ist eine optisch besonders unauffällige Gestaltung der ersten und der zweiten elektrischen Kontakte ermöglicht und das Sauberhalten des Inneren des Kühlmöbels vereinfacht.

Eine alternative Weiterbildung zu der vorhergehenden Ausführungsform sieht vor, dass die zweiten elektrischen Kontakte als im wesentlichen in einer Ebene mit einer Oberfläche des Kühlmöbels liegende flächige zweite Kontaktstellen und die ersten elektrischen Kontakte als im wesentlichen in einer Ebene mit einer Oberfläche von in dem Randbereich der Platte angeordneten Bolzen liegende flächige erste Kontaktstellen und an die korrespondierenden zweiten Kontaktstellen elektrisch leitend anlegbar ausgebildet sind.

Eine weitere vorteilhafte Weiterbildung der erfindungsgemäßen Lehre sieht vor, dass das Kühlmöbel ein Bedienelement und eine Steuereinheit aufweist, wobei mittels des Bedienelements Lebensmittelbezeichnungen eingebbar bzw. auswählbar und in einer Auswerteschaltung der Steuereinheit mit in einem Speicher der Steuereinheit abgespeicherten Lebensmittelbezeichnungen vergleichbar sind und in Abhängigkeit davon mittels der Steuereinheit die elektrische Lichtquelle der Platte eingeschaltet wird. Hierdurch ist eine von der Art und/oder dem Gewicht des zu lagernden Lebensmittels abhängige Abstellort-Empfehlung für den Benutzer ermöglicht.

Ferner sieht eine vorteilhafte Weiterbildung vor, dass das Kühlmöbel ein Sicherheitsmittel zur Verhinderung von Funkenbildung zwischen dem ersten und dem zweiten elektrischen Kontakt in dem durch die Tür verschlossenen Inneren des Kühlmöbels aufweist. Auf diese Weise ist auch bei in dem Inneren des Kühlmöbels angeordneten elektrischen Kontakten eine Funkenbildung sicher verhindert.

Ein Ausführungsbeispiel der Erfindung ist in den Zeichnungen rein schematisch dargestellt und wird nachfolgend näher beschrieben. Es zeigt
- Figur 1: eine perspektivische Ansicht eines ersten Ausführungsbeispiels eines erfindungsgemäßen Kühlmöbels, ohne Ablagen,
- Figur 2: eine perspektivische Ansicht einer Ablage des ersten Ausführungsbeispiels aus Fig. 1,
- Figur 3: eine perspektivische Ansicht des mit der Ablage aus Fig. 2 verbundenen Gehäuses und eines als Aufnahme ausgebildeten zweiten elektrischen Kontakts, ohne Ablage,
- Figur 4: eine perspektivische Ansicht eines zweiten Ausführungsbeispiels eines erfindungsgemäßen Kühlmöbels, analog Fig. 3 und
- Figur 5: eine perspektivische Ansicht eines dritten Ausführungsbeispiels eines erfindungsgemäßen Kühlmöbels, ohne Ablagen.

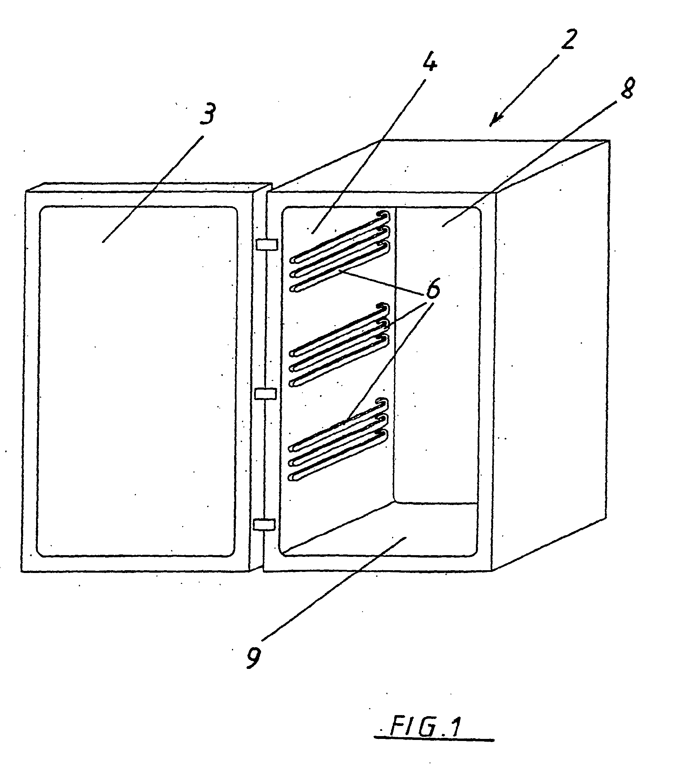

In Fig. 1 ist ein erfindungsgemäßes Kühlmöbel 2 dargestellt. Bei diesem ersten Ausführungsbeispiel ist das Kühlmöbel 2 ein Kühlschrank, in dessen Innerem ein durch eine Tür 3 verschließbarer Kühlraum 4 ausgebildet ist. An den seitlichen Wandungen des den Kühlraum 4 begrenzenden Korpus, von denen lediglich die in der Fig. 1 linke seitliche Wandung gezeigt ist, sind jeweils vertikal voneinander beabstandete und zueinander parallele Vorsprünge 6 ausgebildet, die sich senkrecht zu der Rückwandung 8 des den Kühlraum 4 begrenzenden Korpus erstrecken. Die Vorsprünge 6 beider seitlichen Wandungen sind sich auf einer zu dem Boden 9 des den Kühlraum 4 begrenzenden Korpus parallelen Ebene gegenüberliegend angeordnet.

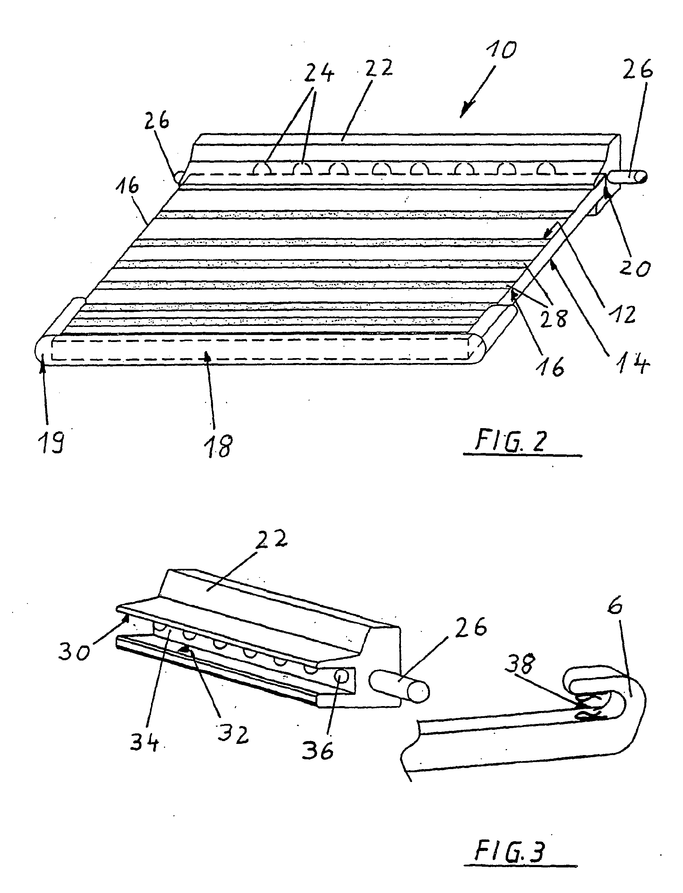

Fig. 2 zeigt eine in den in Fig. 1 dargestellten Kühlschrank 2 einführbare und als Ablage ausgebildete Platte 10. Die Platte 10 ist aus Glas, also einem transparentem Material, und weist eine Oberseite 12, eine Unterseite 14, seitliche Ränder 16 sowie einen vorderen verdeckten Rand 18 (gestrichelt dargestellt) und einen hinteren Rand 20 auf. In dem Bereich des vorderen Rands 18 ist ein Tragteil 19 aus Kunststoff mit der Platte 10 mittels Klebung unlösbar verbunden. Das Tragteil 19 ist zur Halterung der Platte 10 an dem Korpus des Kühlschranks 2, nämlich zur Auflage auf die Vorsprünge 6, ausgebildet. Ferner verhindert das Tragteil 19 eine ungewünschte Lichtauskoppelung mittels des vorderen Rands 18 und eine Beschädigung des vorderen Rands 18, beispielsweise bei dem Hineinstellen oder Herausnehmen von Behältnissen in den Kühlraum 4. In einem eingeführten Zustand, in dem die Platte 10 in den Kühlraum 4 vollständig eingeschoben ist und auf zwei sich in einer Ebene gegenüberliegenden Vorsprüngen 6 beider seitlichen Wandungen aufliegt, befinden sich die seitlichen Ränder 16 gegenüber den seitlichen Wandungen, der hintere Rand 20 gegenüber der Rückwandung 8 und die Unterseite 14 gegenüber dem Boden 9 des Kühlraums 4. In dem Bereich des hinteren Rands 20 ist ein Gehäuse 22 mittels Klebung unlösbar mit der Platte 10 verbunden. In dem Gehäuse 22 sind verdeckte Leuchtdioden (gestrichelt dargestellt) als Lichtquellen 24 entlang der gesamten Länge des Rands 20 im wesentlichen gleich voneinander beabstandet auf einer nicht dargestellten Platine aufgelötet. Leuchtdioden sind kostengünstig beschaffbare Standardbauteile mit einer besonders langen Lebensdauer. Zur Stromversorgung der Leuchtdioden 24 sind diese auf dem Fachmann bekannte Weise mittels auf der Platine angeordneter Leitungen mit elektrischen Kontakten, nämlich mit Stiften, als erste elektrische bzw. elektromagnetische Übertragungsmittel 26 elektrisch leitend verbunden. In den sich parallel zu den seitlichen Rändern 16 der Platte 10 erstreckenden Wandungen des Gehäuses 22 sind Öffnungen vorgesehen durch die die Stifte 26 aus dem Gehäuse 22 herausragen, wobei sich die Stifte 26 senkrecht zu diesen Wandungen des Gehäuses 22 erstrecken. Bei diesem Ausführungsbeispiel sind die Stifte 26 als weitere Tragteile zur Halterung der Platte 10 an dem Korpus des Kühlschranks 2 ausgebildet, wobei die Stifte 26 in dem eingeführten Zustand der Platte 10 auf den Vorsprüngen 6 teilweise aufliegen.

Alternativ zu herkömmlichen Leuchtdioden sind auch organische Leutdioden als Lichtquellen 24 denkbar. Organische Leuchtdioden ermöglichen es beispielsweise, die elektrische Lichtquelle 24 als eine sich im wesentlichen entlang des gesamten Randes 20 der Platte 10 erstreckende Lichtquelle auszubilden. Hierdurch ist eine besonders homogene Anstrahlung bzw. Ausleuchtung der Platte 10 erreicht.

Die Oberfläche der Unterseite 14 der Platte 10 weist beispielsweise durch Ätzen oder Sandstrahlen aufgeraute Bereiche, also Vertiefungen, als Lichtaustrittsflächen 28 auf, siehe Fig. 2. Durch Aufrauung der Oberfläche der Unterseite 14 sind auch komplizierte Geometrien von Lichtaustrittsflächen 28, beispielsweise Schriftzüge wie Firmenbezeichnungen oder dergleichen, einfach und kostengünstig herstellbar. Der Anteil der aufgerauten Oberfläche in bezug auf die gesamte Oberfläche der Unterseite 14 ist in dem Bereich nahe dem vorderen Rand 18, also weiter entfernt von den Leuchtdioden 24, größer als in dem Bereich nahe dem hinteren Rand 20, so dass eine gleichmäßigere Lichtauskopplung über die Unterseite 14 erreicht ist. Grundsätzlich ist es auch möglich, die Vertiefungen bzw. Aufrauungen an der Oberseite 12 der Platte 10 vorzusehen. Nachteilig ist hierbei, dass die Aufrauungen aufgrund von auf der Platte 10 abgestellten Lebensmitteln anfälliger für Verschmutzungen sind.

In Fig. 3 ist das Gehäuse 22 aus Fig. 2 ohne die Platte 10 dargestellt. Das Gehäuse 22 weist an der der Platte 10 zugewandten Seite einen durch zwei Vorsprünge gebildeten inneren Bereich auf. Die Innenflächen dieses inneren Bereichs, obere Innenfläche 30, untere Innenfläche 32 und hintere Innenfläche 34 liegen in dem zusammengebauten Zustand, in dem das Gehäuse 22 mit der Platte 10 mittels Klebung verbunden ist, entsprechend der Oberseite 12, der Unterseite 14 und dem hinteren Rand 20 gegenüber. Bei diesem Ausführungsbeispiel ist der Kleber lediglich zwischen oberer Innenfläche 30 und Oberseite 12 sowie zwischen unterer Innenfläche 32 und Unterseite 14 eingebracht, um den Lichtweg zwischen den Leuchtdioden 24 und dem hinteren Rand 20 der Platte 10 durch den Kleber nicht zu blockieren. In der der hinteren Innenfläche 34 zugeordneten Wandung des Gehäuses 22 sind den Leuchtdioden 24 gegenüberliegende Öffnungen 36 ausgebildet, so dass der Lichtweg nicht durch das Gehäuse 22 blockiert ist. Alternativ hierzu ist es möglich, die in dem zusammengebauten Zustand dem hinteren Rand 20 gegenüberliegende Wandung lichtdurchlässig auszubilden.

Ferner ist in Fig. 3 das als zweiter elektrischer Kontakt, nämlich als Aufnahme, ausgebildete zweite elektrische bzw. elektromagnetische Übertragungsmittel 38 dargestellt. Die Aufnahme 38 ist in dem der Rückwandung 8 des Kühlraums 4 gegenüberliegendem Bereich des Vorsprungs 6 in einer Aussparung des Vorsprungs 6 angeordnet. Bei diesem Ausführungsbeispiel weist jeder Vorsprung 6 des in Fig. 1 dargestellten Kühlschranks 2 eine Aufnahme 38 auf, so dass die Platte 10 erfindungsgemäß auf jeder durch zwei sich gegenüberliegende Vorsprünge 6 beider seitlichen Wandungen gebildeten Ebene in den Kühlraum 4 einschiebbar ist. An den seitlichen Wandungen der Aussparung sind die Aufnahmen 38 als federnde Metallstreifen ausgebildet, so dass diese gleichzeitig das federnde Sicherungsteil bilden. Hierdurch ist eine konstruktiv einfache und funktionssichere elektrische Kontaktierung zwischen dem ersten elektrischen Kontakt 26 und dem zweiten elektrischen Kontakt 38 gegeben.

Eine andere mögliche Ausführungsform der erfindungsgemäßen Lehre sieht vor, dass die zweiten elektrischen Kontakte 38 als im wesentlichen in einer Ebene mit einer Oberfläche des Korpus liegende flächige zweite Kontaktstellen und die ersten elektrischen Kontakte 26 als im wesentlichen in einer Ebene mit einer Oberfläche des Randbereichs der Platte 10 liegend flächige erste Kontaktstellen und an die korrespondierenden zweiten Kontaktstellen 38 elektrisch leitend anlegbar ausgebildet sind. Auf diese Weise ist eine optisch besonders unauffällige Gestaltung der ersten und der zweiten elektrischen Kontakte 26, 38 ermöglicht und das Sauberhalten des Kühlraums 4 vereinfacht.

Bei dem vorliegenden Ausführungsbeispiel liegt die elektrische Lichtquelle 24 in dem eingeschalteten Zustand an Kleinspannung an. Hierdurch ist es ermöglicht, die ersten und die zweiten elektrischen Kontakte 26, 38 sowie die elektrische Lichtquelle 24 ohne Berührungsschutz auszubilden. Ferner wird als Kleinspannung eine Wechselspannung verwendet, da dann galvanische Effekte im Kontaktbereich zwischen den ersten und den zweiten elektrischen Kontakten 26, 38 vermieden werden.

Nachfolgend ist die Funktionsweise des erfindungsgemäßen Kühlmöbels 2 anhand des obigen Ausführungsbeispiels und der Fig. 1 bis 3 erläutert:
Die Tür 3 des Kühlschranks 2 ist geöffnet, so dass der Kühlraum 4 von Außen zugänglich ist.
Die als Ablage ausgebildete Platte 10 wird mit den Stiften 26 auf zwei sich gegenüberliegende Vorsprünge 6 in deren türnahen Bereich aufgelegt und in den Kühlraum 4 hineingeschoben. In dem eingeführten Zustand ist die Platte 10 vollständig in dem Kühlraum 4 aufgenommen und ruht mit den Stiften 26 und dem Tragteil 19 auf zwei sich gegenüberliegend an den beiden seitlichen Wandungen des Kühlraums 4 ausgebildeten Vorsprüngen 6. In dem nicht dargestellten eingeführten Zustand greifen die Stifte 26 in die korrespondierenden Aufnahmen 38 ein und sind aufgrund der Ausbildung der Aufnahmen 38 als federnde Sicherungsteile in dieser Eingriffstellung gegen eine ungewünschte Lageänderung gesichert.

Der elektrische Stromkreis, durch den die Leuchtdioden 24 in dem eingeschalteten Zustand mit elektrischer Energie versorgt sind, weist einen nicht dargestellten Schalter auf. Dieser Schalter öffnet bei geschlossener Tür 3, also wenn der Kühlraum 4 von Außen unzugänglich ist, den elektrischen Stromkreis und der Kühlraum 4 ist nicht beleuchtet. Bei geöffneter Tür 3 ist der elektrische Stromkreis durch den Schalter geschlossen, elektrischer Strom ist von dem zweiten elektrischen bzw. elektromagnetischen Übertragungsmittel 38 zu dem ersten elektrischen bzw. elektromagnetischen Übertragungsmittel 26 übertragbar und die Leuchtdioden 24 sind eingeschaltet. Das von den Leuchtdioden 24 ausgestrahlte Licht tritt teilweise durch die in dem Gehäuse 22 ausgebildeten Öffnungen 36 hindurch und trifft auf den der hinteren Innenfläche 34 gegenüberliegenden hinteren Rand 20 der Platte 10. Zur Verbesserung der Lichtausbeute ist es möglich, in der Umgebung jeder Leuchtdiode 24 reflektierende Mittel, beispielsweise Hohlspiegel, vorzusehen, so dass das von der Leuchtdiode 24 ausgestrahlte Licht gebündelt in Richtung der Öffnung 36 abgestrahlt wird. Die lichtdurchlässige Platte 10 leitet das auf diese Weise eingekoppelte Licht bis zu den aufgerauten Bereichen weiter. Da in diesen Bereichen die Totalreflexion nicht gegeben ist, wird das Licht in diesen Bereichen der Platte 10 ausgekoppelt, also emittiert. Hierdurch ist eine besonders gleichmäßige Beleuchtung des Kühlraums 4 ermöglicht. Da bei diesem Ausführungsbeispiel die Leuchtdioden in dem eingeschalteten Zustand an Kleinspannung anliegen, ist es nicht erforderlich, die elektrischen Kontakte, Stifte 26 und Aufnahmen 38, sowie die Lichtquellen, Leuchtdioden 24, berührungssicher auszubilden. Als Kleinspannung wird eine Wechselspannung verwendet.

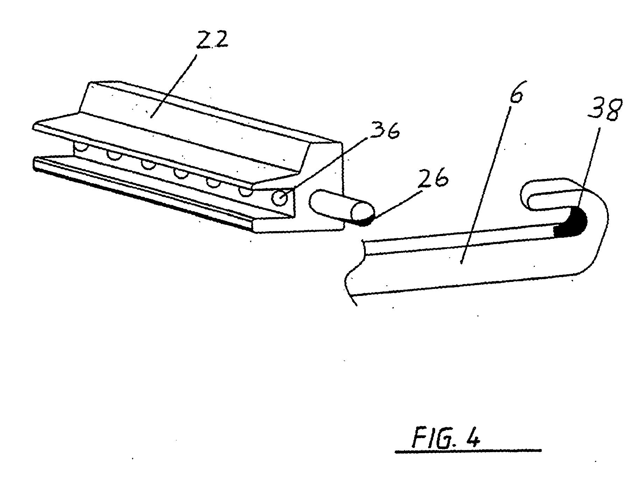

Fig. 4 zeigt ein zweites Ausführungsbeispiel des erfindungsgemäßen Kühlmöbels 2. Im Unterschied zu dem vorhergehenden Ausführungsbeispiel ist hier die Ausgestaltung der elektrischen Kontakte 26, 38 anders. Die zweiten elektrischen Kontakte 38 sind als im Wesentlichen in einer Ebene mit einer Oberfläche der Vorsprünge 6 liegende flächige zweite Kontaktstellen ausgebildet. Die ersten elektrischen Kontakte 26 sind als im Wesentlichen in einer Ebene mit einer Oberfläche von in dem Randbereich der Platte 10 angeordneten Bolzen liegende flächige erste Kontaktstellen 26 ausgebildet. In dem bereits beschriebenen eingeführten Zustand liegen die ersten Kontaktstellen 26 an den korrespondierenden zweiten Kontaktstellen 38 elektrisch leitend an, so dass in dem ebenfalls bereits beschriebenen eingeschalteten Zustand die Leuchtdioden 24 an Kleinspannung anliegen und der Kühlraum 4 beleuchtet ist. Bei diesem Ausführungsbeispiel ist eine optisch besonders unauffällige Gestaltung der ersten elektrischen Kontakte 26 und der zweiten elektrischen Kontakte 38 ermöglicht und das Sauberhalten des Kühlraums 4 vereinfacht.

In einer weiteren Ausführungsform der erfindungsgemäßen Lehre kann das erste elektrische bzw. elektromagnetische Übertragungsmittel 26 als eine elektrische Sekundärspule und das zweite elektrische bzw. elektromagnetische Übertragungsmittel 38 als eine elektrische Primärspule ausgebildet. Hierdurch ist eine induktive Leistungsübertragung, also die elektromagnetische Übertragung eines elektrischen Stromes von dem zweiten elektromagnetischen Übertragungsmittel 38 auf das erste elektromagnetische Übertragungsmittel 26, ermöglicht, so dass beispielsweise die Möglichkeit einer Funkenbildung zwischen ersten und zweiten elektrischen Kontakten in dem durch die Tür 3 verschlossenen Inneren des Kühlmöbels, nämlich Kühlraum 4, ausgeschlossen ist, da derartige Kontakte hier nicht erforderlich sind.

Eine andere mögliche Ausführungsform sieht vor, dass das Kühlmöbel 2 ein Sicherheitsmittel, beispielsweise einen Reed-Kontaktschalter, zur Verhinderung von Funkenbildung zwischen dem ersten und dem zweiten elektrischen Kontakt in dem durch die Tür verschlossenen Inneren des Kühlmöbels aufweist. Auf diese Weise ist auch bei in dem Inneren des Kühlmöbels, nämlich Kühlraum 4, angeordneten elektrischen Kontakten 26, 38 eine Funkenbildung sicher verhindert. Ein derartiges Sicherheitsmittel wäre beispielsweise bei den oben erläuterten ersten und zweiten Ausführungsbeispielen anwendbar. Bei dem beispielhaft genannten Reed-Kontaktschalter würde der elektrische Stromkreis erst dann geschlossen, wenn ein an der Ablage 10 angeordneter Permanentmagnet den Reed-Kontaktschalter bei vollständig eingeschobener Ablage 10 in dessen Schließlage überführt.

Ferner sieht eine weitere mögliche Ausführungsform vor, dass das Kühlmöbel 2 ein Bedienelement und eine Steuereinheit aufweist, wobei mittels des Bedienelements Lebensmittelbezeichnungen eingebbar bzw. auswählbar und in einer Auswerteschaltung der Steuereinheit mit in einem Speicher der Steuereinheit abgespeicherten Lebensmittelbezeichnungen vergleichbar sind und in Abhängigkeit davon mittels der Steuereinheit die elektrische Lichtquelle 24 der Platte 10 eingeschaltet wird. Hierdurch ist eine von der Art und/oder dem Gewicht des zu lagernden Lebensmittels abhängige Abstellort-Empfehlung für den Benutzer ermöglicht. Beispielsweise wäre es denkbar, dass nach einer durch den Benutzer an dem Bedienelement vorgenommenen Eingabe der Lebensmittelbezeichnung ein für das zu lagernde Lebensmittel geeigneter Abstellort dadurch dem Benutzer angezeigt wird, dass die Lichtquellen 24 der entsprechenden Platte 10 für einen begrenzten Zeitraum im Wechsel ein- und ausgeschaltet werden, so dass eine blinkende Platte 10 den Benutzer auf den von dem Kühlmöbel 2 vorgeschlagenen Abstellort aufmerksam macht. Auf diese Weise ist eine sichere Anzeige der Abstellort-Empfehlung für den Benutzer auch dann gewährleistet, wenn die Lichtquellen 24 anderer Platten 10 zwecks Ausleuchtung des Kühlraumes 4 eingeschaltet sind.

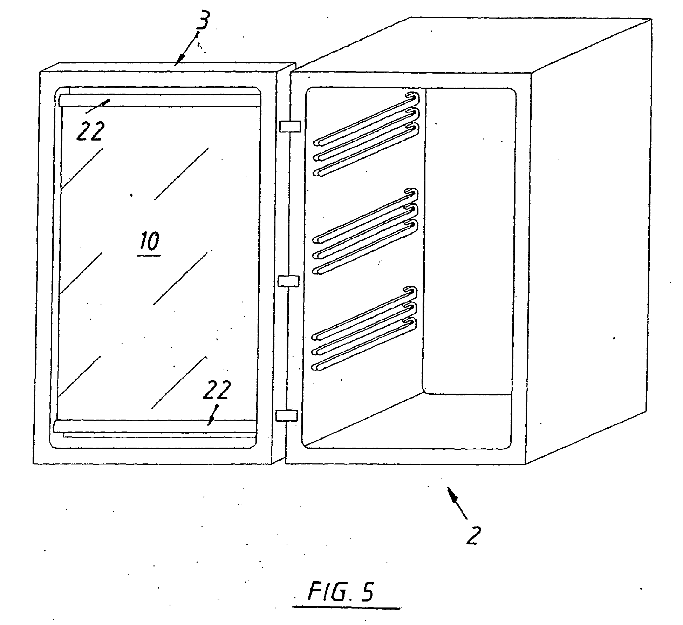

In Fig. 5 ist ein drittes Ausführungsbeispiel des erfindungsgemäßen Kühlmöbels 2 dargestellt. Im Unterschied zu den vorgenannten ersten beiden Ausführungsbeispielen ist hier neben denen als Ablage ausgebildeten Platten 10, die in Fig. 5 nicht dargestellt sind, auch eine als von der Innenseite der Tür 3 entfernbare Zwischenwand ausgebildete Platte 10 verwendet. Auf diese Weise ist ein homogenes Erscheinungsbild des Kühlmöbels 2 bei geöffneter Tür 3 gewährleistet, da bei eingelegten Ablagen 10 sowohl der Kühlraum 4 als auch die daneben angeordnete Innenseite der Tür 3 ausgeleuchtet bzw. beleuchtet ist. Aufgrund der größeren Länge der Zwischenwand 10 weist die Zwischenwand 10 im Unterschied zu den kürzeren Ablagen 10 an beiden Rändern 20 ein Gehäuse 22 auf, so dass die Zwischenwand 10 gleichmäßig hell erscheint. Vorteilhafterweise gleicht die Zwischenwand 10 in deren anderen Abmessungen den Ablagen 10. Auf diese Weise ist die Herstellung vereinfacht. Bis auf die vorgenannten Unterschiede gelten die Erläuterungen zu den ersten beiden Ausführungsbeispielen auch für das dritte Ausführungsbeispiel und auch für die als Zwischenwand ausgebildete Platte 10. Vor die Zwischenwand 10 können an der Innenseite der Tür 3 auf dem Fachmann bekannte Weise weitere Ablagen angeordnet sein. Abweichend von diesem Ausführungsbeispiel kann die Zwischenwand 10 auch in einzeln beleuchtete Abschnitte unterteilt werden. Durch die Zuordnung von verschiedenen Lichtquellen 24 zu den einzelnen Abschnitten der Zwischenwand 10 ist auch bezüglich der an der Innenseite der Tür 3 angeordneten weiteren Ablagen eine Ablageort-Empfehlung analog zu den ersten beiden Ausführungsbeispielen ermöglicht.

## Patentansprüche

1. Kühlmöbel, insbesondere Kühlschrank, mit einer an dem Kühlmöbel angeordneten Platte aus lichtleitendem Material an deren einem Rand eine elektrische Lichtquelle angebracht ist, wobei die Platte an einer Seite eine Lichtaustrittsfläche aufweist und als Lichtleiter zwischen der elektrischen Lichtquelle und der Lichtaustrittsfläche verwendet ist, wobei die Platte (10) von dem Kühlmöbel (4) entfernbar ausgebildet ist und die elektrische Lichtquelle (24) ein erstes elektrisches bzw. elektromagnetisches Übertragungsmittel (26) aufweist, das mit einem an dem Kühlmöbel (2) angebrachten zweiten elektrischen bzw. elektromagnetischen Übertragungsmittel (38) in dem eingeführten bzw. eingebauten Zustand der Platte (10) derart zusammenwirkt, dass elektrischer Strom von dem zweiten elektrischen bzw. elektromagnetischen Übertragungsmittel (38) zu dem ersten elektrischen bzw. elektromagnetischen Übertragungsmittel (26) übertragbar ist,
**dadurch gekennzeichnet,**
**dass** die elektrische Lichtquelle (24) in einem mit dem Rand der Platte (20) verbundenen Gehäuse (22) angeordnet ist.

2. Kühlmöbel (2) nach Anspruch 1,
**dadurch gekennzeichnet,**
**dass** das Gehäuse (22) lösbar mit dem Rand der Platte (26) verbunden ist.

3. Kühlmöbel (2) nach Anspruch 1,
**dadurch gekennzeichnet,**
**dass** das Gehäuse (22) unlösbar mit dem Rand der Platte (26) verbunden ist.

4. Kühlmöbel (2) nach einem der Ansprüche 1 bis 3,
**dadurch gekennzeichnet,**
**dass** das erste elektrische bzw. elektromagnetische Übertragungsmittel (26) als eine elektrische Sekundärspule und das zweite elektrische bzw. elektromagnetische Übertragungsmittel (38) als eine elektrische Primärspule ausgebildet sind.

5. Kühlmöbel (2) nach einem der Ansprüche 1 bis 3,
**dadurch gekennzeichnet,**
**dass** das erste elektrische bzw. elektromagnetische Übertragungsmittel (26) als erste elektrische Kontakte und das zweite elektrische bzw. elektromagnetische Übertragungsmittel (38) als zweite elektrische Kontakte ausgebildet und in dem eingeführten bzw. eingebauten Zustand elektrisch leitend verbunden sind.

6. Kühlmöbel (2) nach mindestens einem der Ansprüche 1 bis 5,
**dadurch gekennzeichnet,**
**dass** die Platte (10) als aus dem Inneren des Kühlmöbels (4) herausnehmbare Ablage ausgebildet ist.

7. Kühlmöbel (2) nach mindestens einem der Ansprüche 1 bis 6,
**dadurch gekennzeichnet,**
**dass** die Platte (10) als von der Innenseite einer Tür entfernbare Zwischenwand ausgebildet ist.

8. Kühlmöbel (2) nach mindestens einem der Ansprüche 1 bis 7,
**dadurch gekennzeichnet,**
**dass** die Lichtaustrittsfläche (28) durch mindestens eine Vertiefung in der Oberfläche der Seite (14) gebildet ist.

9. Kühlmöbel (2) nach mindestens einem der Ansprüche 3 bis 8,
**dadurch gekennzeichnet,**
**dass** die zweiten elektrischen Kontakte (38) als Aufnahmen ausgebildet und die ersten elektrischen Kontakte (26) als Stifte und in die Aufnahmen eingreifbar ausgebildet sind.

10. Kühlmöbel (2) nach mindestens einem der Ansprüche 5 bis 9,
**dadurch gekennzeichnet,**
**dass** die zweiten elektrischen Kontakte (38) als im Wesentlichen in einer Ebene mit einer Oberfläche des Kühlmöbels (2) liegende flächige zweite Kontaktstellen und die ersten elektrischen Kontakte (26) als im Wesentlichen in einer Ebene mit einer Oberfläche des Randbereichs der Platte (10) liegende flächige erste Kontaktstellen und an die korrespondierenden zweiten Kontaktstellen elektrisch leitend anlegbar ausgebildet sind.

11. Kühlmöbel (2) nach mindestens einem der Ansprüche 5 bis 10,
**dadurch gekennzeichnet,**
**dass** die zweiten elektrischen Kontakte (38) als im Wesentlichen in einer Ebene mit einer Oberfläche des Kühlmöbels (2) liegende flächige zweite Kontaktstellen und die ersten elektrischen Kontakte (26) als im Wesentlichen in einer Ebene mit einer Oberfläche von in dem Randbereich der Platte (10) angeordneten Bolzen liegende flächige erste Kontaktstellen und an die korrespondierenden zweiten Kontaktstellen elektrisch leitend anlegbar ausgebildet sind.

12. Kühlmöbel (2) nach mindestens einem der Ansprüche 1 bis 11,
**dadurch gekennzeichnet,**
**dass** das Kühlmöbel (2) ein Bedienelement und eine Steuereinheit aufweist, wobei mittels des Bedienelements Lebensmittelbezeichnungen eingebbar bzw. auswählbar und in einer Auswerteschaltung der Steuereinheit mit in einem Speicher der Steuereinheit abgespeicherten Lebensmittelbezeichnungen vergleichbar sind und in Abhängigkeit davon mittels der Steuereinheit die elektrische Lichtquelle (24) der Platte (10) eingeschaltet wird.

13. Kühlmöbel (2) nach mindestens einem der Ansprüche 5 bis 12,
**dadurch gekennzeichnet,**
**dass** das Kühlmöbel (2) ein Sicherheitsmittel zur Verhinderung von Funkenbildung zwischen dem ersten und dem zweiten elektrischen Kontakt (26, 38) in dem durch die Tür (3) verschlossenen Inneren des Kühlmöbels (4) aufweist.

## Claims

1. Refrigerating appliance, in particular a refrigerator, comprising a plate which is arranged on the refrigerating appliance and is made of light-conducting material and to one edge of which an electric light source is attached, the plate comprising a light emergence surface on one side and being used as an optical waveguide between the electric light source and the light emergence surface, the plate (10) being formed so as to be removable from the refrigerating appliance (4) and the electric light source (24) comprising a first electric or electromagnetic transfer means (26) which cooperates with a second electric or electromagnetic transfer means (38) attached to the refrigerating appliance (2) when the plate (10) is in the inserted or installed state, in such a way that electric current can be transferred from the second electric or electromagnetic transfer means (38) to the first electric or electromagnetic transfer means (26), **characterised in that** the electric light source (24) is arranged in a housing (22) connected to the edge of the plate (20).

2. Refrigerating appliance (2) according to claim 1, **characterised in that** the housing (22) is releasably connected to the edge of the plate (26).

3. Refrigerating appliance (2) according to claim 1, **characterised in that** the housing (22) is non-releasably connected to the edge of the plate (26).

4. Refrigerating appliance (2) according to any one of claims 1 to 3, **characterised in that** the first electric or electromagnetic transfer means (26) is formed as an electric secondary coil, and the second electric or electromagnetic transfer means (38) is formed as an electric primary coil.

5. Refrigerating appliance (2) according to any one of claims 1 to 3, **characterised in that** the first electric or electromagnetic transfer means (26) is formed as first electric contacts, and the second electric or electromagnetic transfer means (38) is formed as second electric contacts, and these are in an electrically conductive connection when in the inserted or installed state.

6. Refrigerating appliance (2) according to at least one of claims 1 to 5, **characterised in that** the plate (10) is formed as a tray which can be removed from the interior of the refrigerating appliance (4).

7. Refrigerating appliance (2) according to at least one of claims 1 to 6, **characterised in that** the plate (10) is formed as a partition wall which can be removed from the inside of a door.

8. Refrigerating appliance (2) according to at least one of claims 1 to 7, **characterised in that** the light emergence surface (28) is formed by at least one recess in the surface of the side (14).

9. Refrigerating appliance (2) according to at least one of claims 3 to 8, **characterised in that** the second electric contacts (38) are formed as sockets, and the first electric contacts are formed as pins (26) in such a way that they can engage in the sockets.

10. Refrigerating appliance (2) according to at least one of claims 5 to 9, **characterised in that** the second electric contacts (38) are formed as planar second contact points which are substantially on a level with a surface of the refrigerating appliance (2), and the first electric contacts (26) are formed as planar first contact points which are substantially on a level with an edge region of the plate (10), in such a way that said first contact points can be placed in electrically conductive contact with the corresponding second contact points.

11. Refrigerating appliance (2) according to at least one of claims 5 to 10, **characterised in that** the second electric contacts (38) are formed as planar second contact points which are substantially on a level with a surface of the refrigerating appliance (2), and the first electric contacts (26) are formed as planar first contact points which are substantially on a level with a surface of bolts arranged in the edge region of the plate (10), in such a way that said first contact points can be placed in electrically conductive contact with the corresponding second contact points.

12. Refrigerating appliance (2) according to at least one of claims 1 to 11, **characterised in that** the refrigerating appliance (2) comprises a control element and a control unit, it being possible to input or select food designations using the control element and to compare them, in an evaluation circuit of the control unit, with food designations stored in a storage means of the control unit, and the electric light source (24) of the plate (10) being switched on in dependence thereon by the control unit.

13. Refrigerating appliance (2) according to at least one of claims 5 to 12, **characterised in that** the refrigerating appliance (2) comprises a safety means for preventing arcing between the first and second electric contact (26, 38) in the interior; sealed by the door (3), of the refrigerating appliance (4).

## Revendications

1. Meuble réfrigérant, en particulier réfrigérateur, avec une plaque en matériau conduisant la lumière disposée sur le meuble réfrigérant et sur le bord de laquelle est disposée une source lumineuse électrique, la plaque présentant sur un côté une surface de sortie de lumière et étant utilisée comme guide de lumière entre la source lumineuse électrique et la surface de sortie de lumière, la plaque (10) étant constituée de façon à pouvoir être enlevée du meuble réfrigérant (4), et la source lumineuse (24) électrique présentant un premier moyen de transmission (26) électrique ou électromagnétique qui coopère, dans l'état introduit ou monté de la plaque (10), avec un deuxième moyen de transmission (38) électrique ou électromagnétique placé sur le meuble réfrigérant (2) de sorte qu'un courant électrique peut être transmis depuis le deuxième moyen de transmission (38) électrique ou électromagnétique vers le premier moyen de transmission (26) électrique ou électromagnétique,
**caractérisé en ce que**
la source lumineuse (24) électrique est disposée dans un boîtier (22) raccordé à un bord de la plaque (20).

2. Meuble réfrigérant (2) selon la revendication 1,
**caractérisé en ce que**
le boîtier (22) est raccordé de façon détachable au bord de la plaque (26).

3. Meuble réfrigérant (2) selon la revendication 1,
**caractérisé en ce que**
le boîtier (22) est raccordé de façon non détachable au bord de la plaque (26).

4. Meuble réfrigérant (2) selon l'une des revendications 1 à 3,
**caractérisé en ce que**
le premier moyen de transmission (26) électrique ou électromagnétique est constitué en tant que bobine secondaire électrique, et le deuxième moyen de transmission (38) électrique ou électromagnétique est constitué en tant que bobine primaire électrique.

5. Meuble réfrigérant (2) selon l'une des revendications 1 à 3,
**caractérisé en ce que**
le premier moyen de transmission (26) électrique ou électromagnétique est constitué en tant que premiers contacts électriques, et le deuxième moyen de transmission (38) électrique ou électromagnétique est constitué en tant que deuxièmes contacts électriques, et **en ce qu'**ils sont raccordés de façon électriquement conductrice dans l'état introduit ou monté.

6. Meuble réfrigérant (2) selon au moins une des revendications 1 à 5,
**caractérisé en ce que**
la plaque (10) est constituée en tant que tablette pouvant être extraite de l'intérieur du meuble réfrigérant (4).

7. Meuble réfrigérant (2) selon au moins une des revendications 1 à 6,
**caractérisé en ce que**
la plaque (10) est constituée en tant que paroi intermédiaire pouvant être extraite du côté intérieur d'une porte.

8. Meuble réfrigérant (2) selon au moins une des revendications 1 à 7,
**caractérisé en ce que**
la surface de sortie de lumière (28) est formée par au moins un creux dans la surface du côté (14).

9. Meuble réfrigérant (2) selon au moins une des revendications 3 à 8,
**caractérisé en ce que**
les deuxièmes contacts électriques (38) sont constitués en tant que logements et les premiers contacts électriques (26) sont constitués en tant que fiches et peuvent entrer en prise avec les logements.

10. Meuble réfrigérant (2) selon au moins une des revendications 5 à 9,
**caractérisé en ce que**
les deuxièmes contacts électriques (38) sont constitués en tant que deuxièmes points de contact plans essentiellement à niveau avec une surface du meuble réfrigérant (2), et les premiers contacts électriques (26) sont constitués en tant que premiers points de contact plans essentiellement à niveau avec une surface de la zone marginale de la plaque (10) et pouvant être posés de façon électriquement conductrice contre les deuxièmes points de contact correspondants.

11. Meuble réfrigérant (2) selon au moins une des revendications 5 à 10,
**caractérisé en ce que**
les deuxièmes contacts électriques (38) sont constitués en tant que deuxièmes points de contact plans essentiellement à niveau avec une surface du meuble réfrigérant (2), et les premiers contacts électriques (26) sont constitués en tant que premiers points de contact plans essentiellement à niveau avec une surface de boulons disposés dans la zone marginale de la plaque (10) et pouvant être posés de façon électriquement conductrice contre les deuxièmes points de contact correspondants.

12. Meuble réfrigérant (2) selon au moins une des revendications 1 à 11,
**caractérisé en ce que**
le meuble réfrigérant (2) présente un élément de manoeuvre et une unité de commande, des désignations d'aliments pouvant être entrées ou sélectionnées au moyen de l'élément de manoeuvre et être comparées à des désignations d'aliments enregistrées dans une mémoire de l'unité de commande, et **en ce que** la source lumineuse (24) électrique de la plaque (10) est mise en circuit en fonction de cela au moyen de l'unité de commande.

13. Meuble réfrigérant (2) selon au moins une des revendications 5 à 12,
**caractérisé en ce que** le meuble réfrigérant (2) présente un moyen de sécurité pour empêcher la formation d'étincelles entre le premier et le deuxième contact électrique (26, 38) dans l'intérieur, fermé par la porte (3), du meuble réfrigérant (4).
